# EUROPEAN PATENT APPLICATION

(11) **EP 1 134 912 A2**
(43) Date of publication of application: **19.09.2001**
(21) Application number: 00113694.4
(22) Date of filing: 21.03.2000
(51) Int. Cl.: H04B 7/005, H04B 7/26

(54) **Method and apparatus for enhanced power ramp-up in a CDMA communication system**

(30) Priority: 22.03.1999 US 273508; 24.03.1999 US 275010; 04.05.1999 US 304345
(62) Divisional of application: 00940005.2
(71) Applicant: Golden Bridge Technology, Inc., West Long Branch, NJ 07764 (US)
(72) Inventor: Kanterakis, Emmanuel, North Brunswick, NJ 08902 (US); Parsa, Kourosh, Riverside, CT 06878 (US)
(74) Representative: Rupprecht, Kay, Dipl.-Ing.

(57) **Abstract**

An improvement to a CDMA system employing spread-spectrum modulation in accordance with the invention comprises a steps of transmitting from the base station a broadcast common-synchronization channel having a common chip-sequence signal common to the plurality of remote stations, receiving at a first remote station receiver the broadcast common-synchronization channel, and determining frame timing from the frame-timing signal, transmitting from a first remote station transmitter an access-burst signal having a plurality of segments with a plurality of power levels, respectively, receiving at the base station the access-burst signal at a detected power level, transmitting an acknowledgment signal from the base station to the first remote station, receiving the acknowledgement signal at the first remote station and transmitting from the first remote station, responsive to the acknowledgement signal, to the base station a spread-spectrum signal having data.

## Description

A general object of the invention is an efficient method for packet data transfer on CDMA systems.

Another object of the invention is high data throughput ad low delay, and efficient power control.

According to the present invention, as embodied and broadly described herein, an improvement to a code-division-multiple-access (CDMA) system employing spread-spectrum modulation, is provided. The CDMA system has a base station (BS) and a plurality of remote stations. The base station has BS-spread-spectrum transmitter and a BS-spread-spectrum receiver. Each of the plurality of remote stations has an RS-spread-spectrum transmitter and an RS-spread-spectrum receiver.

An improvement to a CDMA system employing spread-spectrum modulation in accordance with the invention comprises the steps of transmitting from the base station a broadcast common-synchronization channel having a common chip-sequence signal common to the plurality of remote stations, receiving at a first remote station receiver the broadcast common-synchronization channel, and determining frame timing from the frame-timing signal, transmitting from a first remote station transmitter an access-burst signal having a plurality of segments with a plurality of power levels, respectively, receiving at the base station the access-burst signal at a detected power level, transmitting an acknowledgment signal from the base station to the first remote station, receiving the acknowledgement signal at the first remote station and transmitting from the first remote station, responsive to the acknowledgement signal, to the base station a spread-spectrum signal having data.

A corresponding improvement of a CDMA arrangement comprises a base station spread-spectrum transmitter, a first remote station spread-spectrum receiver, a first remote station spread-spectrum transmitter, and a base station spread-spectrum receiver arranged to carry out the above-mentioned mattered steps.

Furthermore, an improvement to a CDMA system employing spread-spectrum modulation in accordance with the invention comprises a first base station with a first transmitter and a first receiver, a second base station with a second transmitter and a second receiver, and a plurality of remote stations each of which having a transmitter and a receiver. In this improvement the steps of transmitting from the first base station a first broadcast common-synchronization channel having a first common chip-sequence signal, transmitting from the second base station a second broadcast common-synchronization channel having a second common-sequence signal, each of the broadcast common-synchronization channels having a specific frame-timing signal, receiving at a remote station the first and second broadcast common-synchronization channel and determining a first and second frame-timing, determining, based on any of power levels and probabilities of error, at the first remote station from the first and second broadcast common-synchronization channel..., transmitting a first access-burst signal from the first remote station to the first base station, receiving the first access-burst signal at a first detected-power level at the first base station, responsive to the first access-burst signal, a first acknowledgement signal, receiving the first acknowledgement signal at the first remote station, and transmitting from the first remote station to the first base station a first spread-spectrum signal having data.

## Claims

1. An improvement to a code-division-multiple-access (CDMA) system employing spread-spectrum modulation, with the CDMA system having a base station (BS) with a BS-spread-spectrum transmitter and a BS-spread-spectrum receiver, and a plurality of remote stations, with each remote station (RS) having an RS-spread-spectrum transmitter and an RS-spread-spectrum receiver, the method comprising the steps of:
transmitting from said BS-spread-spectrum transmitter located at said base station, a broadcast common-synchronization channel having a common chip-sequence signal common to the plurality of remote stations, the broadcast common-synchronization channel having a frame-timing signal;
receiving at a first RS-spread-spectrum receiver the broadcast common-synchronization channel, and determining frame timing at said first RS-spread-spectrum receiver from the frame-timing signal;
transmitting from a first RS-spread-spectrum transmitter an access-burst signal, the access-burst signal having a plurality of segments, with the plurality of segments having a plurality of power levels, respectively;
receiving at said BS-spread-spectrum receiver the access-burst signal at a detected-power level;
transmitting from said BS-spread-spectrum transmitter to said first RS-spread-spectrum receiver, responsive to the
access-burst signal, an acknowledgment signal;
receiving at said first RS-spread-spectrum receiver the acknowledgment signal; and
transmitting from said first RS-spread-spectrum transmitter, responsive to the acknowledgment signal, to said BS-spread-spectrum receiver, a spread-spectrum signal having data.

2. An improvement to a code-division-multiple-access (CDMA) system employing spread-spectrum modulation, with the CDMA system having a base station (BS) and a plurality of remote stations (RS) with each remote station having an RS-spread-spectrum transmitter and an RS-spread-spectrum receiver, the improvement comprising:
a BS-spread-spectrum transmitter located at said base station, for transmitting a broadcast common-synchronization channel having a common chip-sequence signal common to the plurality of remote stations, the broadcast common-synchronization channel having a frame-timing signal;
a first RS-spread-spectrum receiver, located at a first remote station of the plurality of remote stations, for receiving the broadcast common-synchronization channel, and determining frame timing at said first RS-spread-spectrum receiver from the frame-timing signal;
a first RS-spread-spectrum transmitter, located at said first remote station of said plurality of remote stations, for transmitting an access-burst signal, the access-burst signal having a plurality of segments, with the plurality of segments having a plurality of power levels, respectively;
said BS-spread-spectrum receiver for receiving the access-burst signal at a detected-power level;
said BS-spread-spectrum transmitter for transmitting to said first RS-spread-spectrum receiver, responsive to receiving the access-burst signal, an acknowledgment signal;
said first RS-spread-spectrum receiver for receiving the acknowledgment signal; and
said first RS-spread-spectrum transmitter, responsive to the acknowledgment signal, for transmitting to said BS-spread-spectrum receiver, a spread-spectrum signal having data.

3. An improvement to a code-division-multiple-access (CDMA) system employing spread-spectrum modulation, with the CDMA system having a first base station (BS) with a first BS-spread-spectrum transmitter and a first BS-spread-spectrum receiver, a second base station with a second BS-spread-spectrum transmitter and a second BS-spread-spectrum receiver, and a plurality of remote stations, with each remote station (RS) having an RS-spread-spectrum transmitter and an RS-spread-spectrum receiver, the method comprising the steps of:
transmitting from said first BS-spread-spectrum transmitter located at said first base station, a first broadcast common-synchronization channel having a first common chip-sequence signal common to the plurality of remote stations, the first broadcast common-synchronization channel having a first frame-timing signal;
transmitting from said second BS-spread-spectrum transmitter located at said second base station, a second broadcast common-synchronization channel having a second common chip-sequence signal common to the plurality of remote stations, the second broadcast common-synchronization channel having a second frame-timing signal;
receiving at a first RS-spread-spectrum receiver the first broadcast common-synchronization channel, and determining a first frame timing at said first RS-spread-spectrum receiver from the first frame-timing signal;
receiving at the first RS-spread-spectrum receiver the second broadcast common-synchronization channel, and determining a second frame timing at said first RS-spread-spectrum receiver from the second frame-timing signal; determining, based on any of power levels and probabilities of error, at said first RS-spread-spectrum receiver, from the first broadcast common-synchronization channel and from the second broadcast common-synchronization channel, to transmit to said first base station;
transmitting from a first RS-spread-spectrum transmitter to said first base station, a first access-burst signal; receiving at said first BS-spread-spectrum receiver the first access-burst signal at a first detected-power level; transmitting from said first BS-spread-spectrum transmitter to said first RS-spread-spectrum receiver, responsive to the first access-burst signal, a first acknowledgment signal;
receiving at said first RS-spread-spectrum receiver the first acknowledgment signal; and
transmitting from said first RS-spread-spectrum transmitter, responsive to the first acknowledgment signal, to said first BS-spread-spectrum receiver, a first spread-spectrum signal having data.

4. The improvement as set forth in claim 3, further including the step of transmitting from said first BS-spread-spectrum transmitter, any of data and power-control information, to said RS-spread-spectrum receiver.

5. The improvement as set forth in claim 3, further including the steps of:
determining, based on any of power levels and probabilities of error, at said first RS-spread-spectrum receiver, from the first broadcast common-synchronization channel and from the second broadcast common-synchronization channel, to transmit to said second base station;
transmitting from the first RS-spread-spectrum transmitter to said second base station, a second access-burst signal; receiving at said second BS-spread-spectrum receiver the second access-burst signal at a second detected-power level;
transmitting from said second BS-spread-spectrum transmitter to said first RS-spread-spectrum receiver, responsive to the second access-burst signal, a second acknowledgment signal;
receiving at said first RS-spread-spectrum receiver the second acknowledgment signal; and
transmitting from said first RS-spread-spectrum transmitter, responsive to the second acknowledgment signal, to said second BS-spread-spectrum receiver, a second spread-spectrum signal having data.

6. The improvement as set forth in claim 5 with the step of transmitting from the first RS-spread-spectrum transmitter the second access-burst signal, including the step of transmitting the second access-burst signal with a second plurality of segments having a second plurality of power levels increasing sequentially, respectively.

7. An improvement to a code-division-multiple-access (CDMA) system employing spread-spectrum modulation, with the CDMA system having a first base station (BS), a second base station, and a plurality of remote stations (RS) with each remote station having an RS-spread-spectrum transmitter and an RS-spread-spectrum receiver, the improvement comprising:
a first BS-spread-spectrum transmitter located at said first base station, for transmitting a first broadcast
common-synchronization channel having a first common chip-sequence signal common to the plurality of remote stations, the first broadcast common-synchronization channel having a first frame-timing signal;
a second BS-spread-spectrum transmitter located at said second base station, for transmitting a second broadcast
common-synchronization channel having a second common chip-sequence signal common to the plurality of remote stations, the second broadcast common-synchronization channel having a second frame-timing signal;
a first RS-spread-spectrum receiver, located at a first remote station of the plurality of remote stations, for receiving the first broadcast common-synchronization channel, and determining first frame timing at said first RS-spread-spectrum receiver from the first frame-timing signal;
said first RS-spread-spectrum receiver for receiving the second broadcast common-synchronization channel, and determining a second frame timing at said first RS-spread-spectrum receiver from the second frame-timing signal; means, based on any of power levels and probabilities of error, located at said first RS-spread-spectrum receiver, for determining from the first broadcast common-synchronization channel and from the second broadcast
common-synchronization channel, to transmit to said first base station;
a first RS-spread-spectrum transmitter, located at said first remote station of said plurality of remote stations, for transmitting a first access-burst signal;
said first BS-spread-spectrum receiver for receiving the access-burst signal at a detected-power level;
said first BS-spread-spectrum transmitter for transmitting to said first RS-spread-spectrum receiver, responsive to receiving the first access-burst signal, a first acknowledgment signal;
said first RS-spread-spectrum receiver for receiving the first acknowledgment signal; and
said first RS-spread-spectrum transmitter, responsive to the first acknowledgment signal, for transmitting to said first BS-spread-spectrum receiver, a first spread-spectrum signal having data.

8. The improvement as set forth in claim 7, with said first BS-spread-spectrum transmitter for transmitting any of data and power-control information, to said RS-spread-spectrum receiver.

9. The improvement as set forth in claim 7, further including:
said means for determining, based on any of power levels and probabilities of error, at said first RS-spread-spectrum receiver, from the first broadcast common-synchronization channel and from the second broadcast common-synchronization channel, to transmit to said second base station;
said first RS-spread-spectrum transmitter for transmitting to said second base station, a second access-burst signal;
said second BS-spread-spectrum receiver for receiving the second access-burst signal at a second detected-power level;
said second BS-spread-spectrum transmitter for transmitting to said first RS-spread-spectrum receiver, responsive to the second access-burst signal, a second acknowledgment signal;
said first RS-spread-spectrum receiver for receiving the second acknowledgment signal; and
said first RS-spread-spectrum transmitter, responsive to the second acknowledgment signal, for transmitting to said second BS-spread-spectrum receiver, a second spread-spectrum signal having data.

10. The improvement as set forth in claim 7 with said first RS-spread-spectrum transmitter for transmitting the second access-burst signal with a second plurality of segments having a second plurality of power levels increasing sequentially, respectively.
